# FASCICULE DE BREVET EUROPEEN

(11) **EP 0 550 367 B1**
(45) Date de publication et mention de la délivrance du brevet: **09.10.1996**
(21) Numéro de dépôt: 92460037.2
(22) Date de dépôt: 29.12.1992
(51) Int. Cl.: C02F 3/02, C02F 3/00, C02F 1/76, C02F 1/78

(54) **Procédé d'épuration d'effluents industriels et/ou urbains du type boues activées**
Belebtschlammverfahren zur Reinigung von industriellen und/oder städtischen Abwässern
Activated sludge process for purifying industrial and/or municipal effluents

(30) Priorité: 31.12.1991 FR 9116489
(43) Date de publication de la demande: 07.07.1993
(73) Titulaire: OTV Omnium de Traitements et de Valorisation S.A., 94417 St Maurice Cédex (FR)
(72) Inventeur: Charpentier, Joseph, F-35510 Cesson Sevigne (FR)
(74) Mandataire: Vidon, Patrice

(56) Documents cités:
- EP-A- 0 038 017
- EP-A- 0 070 592
- WO-A-86/03734
- DE-A- 4 024 947
- US-A- 3 679 053

## Description

L'invention concerne le domaine de l'épuration des effluents constitués par exemple par les eaux usées urbaines ou industrielles.

Les méthodes d'épuration classiquement utilisées pour traiter ce type d'effluents font intervenir des procédés biologiques qui reproduisent les phénomènes naturels en les accélérant. Les pollutions les plus fréquentes, qui sont exprimées en D.B.O. (Demande Biologique en Oxygène) peuvent ainsi être traitées grâce à de tels procédés biologiques.

Certaines industries produisent également des effluents difficilement biodégradables car présentant une D.C.O. (Demande Chimique en Oxygène) élevée. Des procédés spéciaux, faisant fréquemment intervenir des substrats chimiques sont alors utilisés.

Classiquement, l'épuration des effluents comprend un prétraitement consistant en :
- une étape de dégrillage au cours de laquelle l'eau à épurer est passée à travers des barreaux peu éloignés les uns des autres,
- une étape de désablage permettant l'élimination des sables et des graviers,
- et en une étape de dégraissage permettant de se débarasser des matières huileuses flottantes.

Ce prétraitement est suivi d'un traitement consistant à favoriser l'attaque des matières polluantes par les bactéries vivant dans le milieu. Bien qu'il existe des techniques faisant intervenir des bactéries liées à un support fixe telles que la technique des "lits bactériens", sur lesquels l'eau ruisselle, la technique la plus couramment utilisée fait intervenir des bactéries non liées à un support mais en suspension dans l'effluent même sous forme de flocons. Cette technique est connue sous le nom de procédé des''boues activées".

Selon la technique des boues activées, les effluents sont amenés dans des bassins au niveau desquels ils sont aérés par insufflation d'air ou même d'oxygène ou par agitation au moyen d'aérateurs ou de turbines. L'élimination biologique de l'azote, correspondant également à l'élimination de la pollution carbonée, peut ainsi être obtenue en alternant dans ces bassins d'aération les périodes oxydantes, au cours desquelles les aérateurs sont en fonctionnement et correspondant à une nitrification du milieu et les périodes réductrices, au cours desquelles les aérateurs sont à l'arrêt et correspondant à une dénitrification du milieu.

Cependant le fonctionnement des aérateurs et en particulier l'alternance des phases d'aération et de non-aération doit faire l'objet d'une surveillance. En effet, des études ont montré qu'un apport d'oxygène trop important par les aérateurs amenait à une augmentation rapide du taux de nitrates dans l'effluent tandis qu'un apport en oxygène trop peu important favorisait l'apparition d'ammoniaque. Le fonctionnement des aérateurs doit donc être contrôlé de façon à respecter un compromis selon lequel l'apport en oxygène par les aérateurs dans les bassins d'aérations ne doit être ni trop peu ni trop important. Ce contrôle a été effectué jusqu'ici grâce à l'utilisation de sondes capables de détecter la concentration en oxygène dissous de l'effluent lors de son séjour dans les bassins d'aération. En fonction des relevés effectués par ces sondes, les durées et les fréquences de fonctionnement des aérateurs sont modifiées de façon à augmenter ou à diminuer selon les cas la quantité d'oxygène apportées par ces aérateurs.

A la sortie des bassins d'aération, l'effluent est, selon les procédés classiques d'épuration, dérivé vers un bassin de décantation afin de séparer l'effluent épuré des boues. Une partie de ces boues peut être renvoyées dans les bassins d'aération afin d'y maintenir la population bactérienne à un niveau élevé.

Ces opérations de prétraitement et de traitement d'épuration biologique peuvent dans certains cas, notamment pour les stations susceptibles de recevoir brutalement des charges importantes, être complétées par un ou plusieurs traitements physico-chimiques se traduisant le plus souvent par des injections massives de réactifs visant à provoquer la décantation des produits polluants que l'on cherche à éliminer. Ainsi, l'élimination de la pollution phosphorée, responsable en grande partie de l'augmentation des risques d'eutrophisation du milieu naturel, se traduit-elle par l'injection massive dans l'effluent de sulfate ferreux. Par ailleurs, lorsque l'effluent traité doit être rejeté dans une zone protégée telle qu'une zone de conchyliculture, une zone balnéaire ou une zone de prise d'eau en vue de la production d'eau potable, un traitement visant à éliminer les germes de l'effluent traité vient compléter l'épuration. Ces germes peuvent ainsi être éliminer par filtration ou encore par introduction de désinfectant tel que le chlore ou l'ozone.

On sait que le taux de nitrate contenu dans l'effluent traité rejeté est un excellent indicateur de la qualité de l'épuration. Ces nitrates constituent des polluants très gênants puisqu'ils favorisent également l'eutrophisation du milieu naturel dans lequel ils sont rejetés et augmentent, de part leur grande solubilité dans l'eau, la difficulté à rendre l'eau potable. Il a été constaté qu'un faible taux de nitrate traduisait non seulement une bonne élimination de la pollution azotée mais correspondait également à une bonne élimination de la pollution carbonée. Ainsi, la concentration en nitrate et/ou en ammoniaque de l'effluent traité est-elle avantageusement prise comme référence pour évaluer la qualité de l'effluent traité et rejeté après l'opération d'épuration.

Dans le cadre de la mise en oeuvre de stations d'épuration du type''boues activées", on a donc cherché à surveiller ce paramètre afin de contrôler la qualité de l'opération d'épuration. En effet, les effluents arrivant à la station d'épuration, encore appelés influents, peuvent avoir une composition variable en qualité dans le temps et présenter une demande en oxygène variable. C'est ainsi notamment le cas pour les effluents d'origines industrielles.

Par conséquent, les aérateurs situés au niveau des bassins d'aération, doivent observer des cycles de fonctionnement pouvant varier suivant la nature et la composition de l'influent.

Le contrôle de la qualité de l'effluent sortant de la station d'épuration était jusqu'ici effectué ponctuellement. Ce contrôle ne pouvait en conséquence avoir lieu sur l'effluent rejeté à la fin du traitement d'épuration, le temps de séjour d'un effluent dans la chaîne d'épuration étant en moyenne de six heures.

Il a donc été proposé dans l'état de la technique de contrôler le paramètre NH₄⁺ (ou NO₃⁻) à l'aide de sondes adéquates à la sortie des bassins d'aération. Cependant l'effluent issu de ces bassins se présente sous la forme d'un mélange hétérogène constitué de boue et d'eau, ce qui constitue un élément de non fiabilité de la mesure. Bien qu'utilisant des électrodes spécifiques, on a constaté que la mesure du paramètre NH₄⁺ (ou NO₃⁻) à la sortie des bassins d'aération ne correspondait pas fidèlement à la concentration en NH₄⁺ (ou NO₃⁻) de l'effluent traité rejeté.

L'objectif de la présente invention est de fournir un procédé d'épuration d'effluents urbains et/ou industriels du type boue activée permettant d'assurer la stabilité de la qualité de l'effluent rejeté, qualité évaluée, par exemple, en fonction de la concentration en NH₄⁺ (ou NO₃⁻), le maintien d'une concentration en NH₄⁺ (ou NO₃⁻) dans l'effluent aussi stable et aussi faible que possible constituant la meilleure garantie de qualité pour cet effluent et permettant par ailleurs d'optimiser la consommation électrique des aérateurs.

Un autre objectif de l'invention est de fournir un procédé d'épuration permettant de contrôler en continu la qualité de l'effluent traité rejeté et d'agir en conséquence sur le fonctionnement des aérateurs des bassins d'aération.

Un autre objectif de l'invention est d'optimiser les coûts de fonctionnement permettant d'aboutir à la qualité désirée.

Enfin, un autre but de l'invention est de faciliter la mise en oeuvre de la mesure de la concentration en nitrates ou en ammoniaque dans l'effluent traité.

Ces objectifs, ainsi que d'autres qui apparaîtront par la suite, sont atteints selon l'invention à l'aide d'un procédé d'épuration d'effluents industriels et/ou urbains, du type "boues activées" comprenant les étapes consistant :
- à faire subir auxdits effluents un prétraitement consistant en au moins une opération de dégrillage et/ou une opération de désablage et/ou une opération de dégraissage ;
- à faire passer lesdits effluents prétraités dans au moins un bassin d'aération à l'intérieur duquel les périodes oxydantes et les périodes réductrices sont alternées respectivement par mise en marche et arrêt d'au moins un aérateur ;
- à faire séjourner lesdits effluents à la sortie dudit bassin d'aération dans au moins un bassin de décantation de façon à recueillir à la sortie dudit bassin de décantation d'une part des boues activées et d'autre part l'effluent traité.

Le procédé selon l'invention est caractérisé en ce qu'il comprend les étapes complémentaires consistant à :
- mesurer continûment un premier paramètre représentatif du niveau d'oxydation de l'effluent contenu dans le bassin d'aération ;
- asservir le fonctionnement dudit aérateur à au moins une valeur de consigne dudit premier paramètre représentatif du niveau d'oxydation ;
- mesurer continûment un second paramètre représentatif de la qualité de l'effluent traité ;
- asservir la détermination de ladite valeur de consigne dudit premier paramètre à au moins une valeur de consigne dudit second paramètre.

Préférentiellement, le fonctionnement dudit aérateur est asservi à deux valeurs de consigne du premier paramètre représentatif du niveau d'oxydation et la détermination de ces deux valeurs de consigne est asservie à deux valeurs de consigne du second paramètre représentatif de la qualité de l'effluent traité.

Ainsi, lors de la mise en oeuvre du procédé, les deux valeurs de consigne du paramètre représentatif du niveau d'oxydation de l'effluent contenu dans le bassin d'aération et les deux valeurs de consigne du paramètre représentatif de la qualité de l'effluent traité sont fixées en fonction de la qualité souhaitée de l'effluent rejeté et du taux d'oxydation acceptable de l'effluent au niveau des bassins d'aération.

Si le paramètre de qualité de l'effluent traité est supérieur à la consigne haute fixée ou inférieur à la consigne basse, il y a décalage automatique des deux consignes du paramètre représentatif du niveau d'oxydation de l'effluent contenu dans le bassin d'aération.

Préférentiellement ledit premier paramètre est choisi dans le groupe constitué par la teneur en oxygène dissout dudit effluent dans le bassin d'aération et le potentiel d'oxydo-réduction dudit effluent dans le bassin d'aération.

Egalement préférentiellement, ledit second paramètre est choisi dans le groupe constitué par la concentration en ammoniaque de l'effluent traité et la concentration en nitrates de l'effluent traité.

D'une façon particulièrement intéressante, ledit premier paramètre est constitué par le potentiel d'oxydo-réduction et le second paramètre est constitué par la concentration en ammoniaque.

D'un point de vue pratique, la mesure du potentiel d'oxydo-réduction, (encore appelée mesure REDOX) présente des avantages indéniables sur la mesure de l'oxygène dissout. En effet la mesure du potentiel REDOX aboutit à un signal plus ample et plus régulier, et utilisable quand la concentration en oxygène dissout est nulle. Cette mesure, contrairement à la mesure de la concentration en oxygène dissout, ne fait pas intervenir de membranes à changer au niveau des électrodes ce qui facilite grandement les opérations de maintenance.

Avantageusement le procédé d'épuration d'effluents selon l'invention comprend une étape supplémentaire consistant à réduire la pollution bactériologique de l'effluent sortant du bassin de décantation grâce à un traitement de désinfection.

Egalement avantageusement, ledit traitement de désinfection est effectué par action de chlore gazeux ou d'ozone.

Préférentiellemnent, le procédé comprend une étape supplémentaire consistant à faire subir à l'effluent un traitement de déphosphatation.

Egalement préférentiellement, ledit traitement de déphosphatation est effectué par addition de sulfate ferreux.

L'invention concerne également une station d'épuration d'effluents urbains et/ou industriels pour la mise en oeuvre du procédé selon l'invention.

D'une façon particulièrement intéressante cette station d'épuration présente au moins une installation de prétraitement des effluents, au moins un bassin d'aération muni d'au moins une turbine constituant un aérateur, au moins un bassin de décantation. La station est caractérisée en ce qu'elle comprend en outre une chaîne de régulation constituée par :
- un dispositif de mesure du potentiel d'oxydo-réduction incluant une sonde disposée dans ledit bassin d'aération ;
- un dispositif de mesure de la concentration en ammoniaque de l'effluent traité incluant une sonde disposée à la sortie dudit bassin de décantation ;
- un automate permettant d'entrer les deux valeurs de consignes du potentiel d'oxydo-réduction correspondant au degré maximum d'oxydation et au degré maximum de réduction dudit effluent, d'entrer par ailleurs les deux valeurs de consigne de ladite concentration en ammoniaque de l'effluent traité, représentatives de la qualité requise de l'effluent rejeté, de recueillir continûment les valeurs du potentiel d'oxydo-réduction et de la concentration d'ammoniaque relevées par lesdits dispositifs, d'asservir les valeurs de consigne du potentiel d'oxydo-réduction auxdites valeurs relevées de la concentration en ammoniaque de l'eau traitée et d'asservir le fonctionnement de ladite turbine auxdites valeurs de consignes du potentiel d'oxydo-réduction.

Selon une variante préférentielle, ledit automate permet de calculer la pente de la courbe de l'évolution du paramètre représentatif de la qualité de l'eau traitée dans le temps et ainsi d'affiner la correction de la ou des valeurs de consigne du paramètre représentatif du niveau d'oxydation de l'effluent contenu dans le ou les bassins d'aération. Cette caractéristique permet notamment de ne pas entraîner la correction trop rapide de variations non significatives du paramètre représentatif du niveau d'oxydation.

Le procédé selon l'invention permet de concilier deux objectifs apparamment antagonistes mais en fait complémentaires à savoir l'alternance des phases nitrifiantes/dénitrifiantes dans le bassin d'aération et la stabilité de la qualité de l'effluent traité se traduisant par une valeur de concentration en ammoniaque ou en nitrates faible et très constante.

Le procédé selon l'invention se révèle plus efficace que les analyses effectuées sur des prélèvements réalisés périodiquement et qui ne tiennent pas compte des dépassementes ponctuels des normes.

La régulation des durées respectives des périodes aérées et non aérées est gérée par la mesure du paramètre représentatif du niveau d'oxydation de l'effluent au niveau des bassins d'aération. Ceci permet d'optimiser l'alternance des phases oxydantes-nitrifiantes et des phases réductrices-dénitrifiantes dans le bassin d'aération. Le procédé selon l'invention constitue une automatisation intégrale de la fonction aération à partir d'une mesure en continu de la qualité de l'effluent.

L'invention ainsi que les différents avantages qu'elle présente seront plus facilement compris grâce à l'exemple de réalisation qui va suivre en référence aux dessins dans lesquels :
- la figure 1 représente un schéma d'une station d'épuration du type boues activées ;
- la figure 2 représente un schéma traduisant la formation des nitrates (NO₃⁻) et de l'ammoniaque (NH₄⁺) en fonction de l'apport d'oxygène effectués par les aérateurs au niveau des bassins d'aération d'une station d'épuration du type boues activées ;
- la figure 3 représente le schéma de principe d'un procédé d'épuration selon l'invention faisant intervenir une régulation de la mesure du potentiel REDOX de l'effluent contenu dans le bassin d'aération par la mesure en continu de la concentration en NH₄⁺ de l'effluent rejeté ;
- la figure 4 représente un diagramme de fonctionnement du procédé selon l'invention.

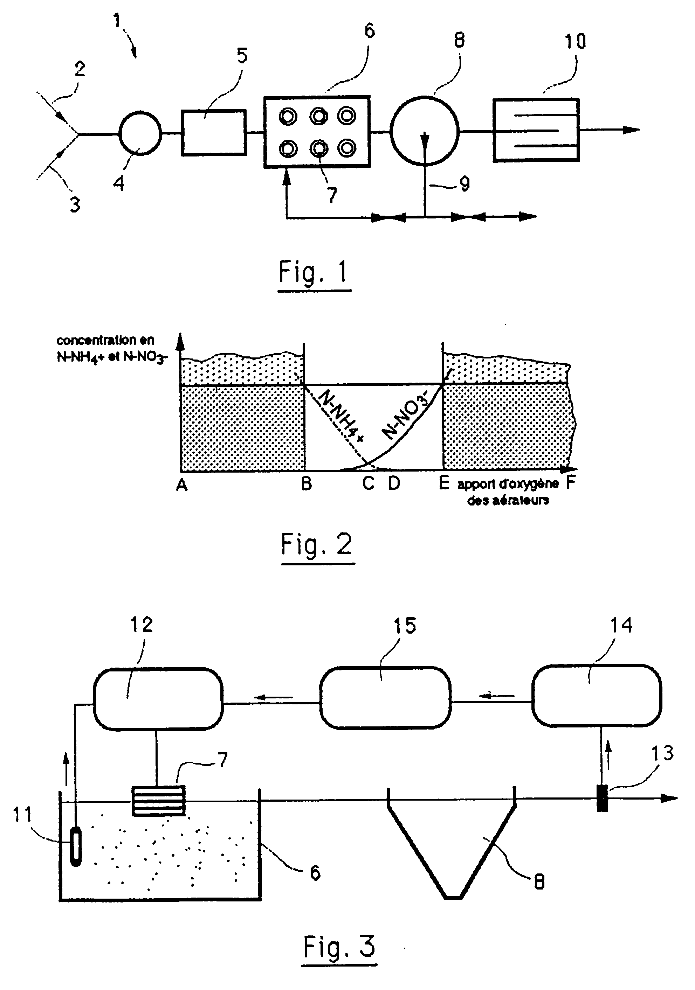

Selon la figure 1, une station d'épuration 1 du type boues activées comprend une arrivée d'effluents d'origine urbaine 2 ainsi qu'une arrivée d'effluents d'origine industrielle 3. Ces arrivées 2 et 3 se rejoignent au niveau d'un poste de relevage 4. De ce poste de relevage les effluents à traiter sont envoyés vers une installation de prétraitement 5 où ils subissent une opération de dégrillage, une opération de désablage et une opération de dégraissage. Les effluents ainsi prétraités sont transférés dans un bassin d'aération 6 équipé de six turbines 7 faisant once d'aérateurs de l'effluent contenu dans le bassin d'aération 6. Ces turbines 7 régulièrement réparties à la surface de ce bassin ont pour objet d'enrichir les effluents en oxygène. Après passage dans le bassin d'aération 6 les effluents sont dirigés vers un bassin de décantation 8 au niveau duquel l'eau épurée est séparée des boues. Ce bassin de décantation est équipé d'un racleur non représenté permettant l'évacuation des boues par une canalisation 9. Ces boues sont soit dirigées vers une unité de traitement des boues pouvant par exemple être constituée par une installation de digestion visant à la récupération de gaz soit renvoyées vers le bassin d'aération afin de maintenir la population bactérienne de celui-ci à un niveau élevé. A la sortie du bassin de décantation 8 l'effluent est dirigé vers un bac de chloration 10 permettant de désinfecter l'effluent.

Le schéma selon la figure 2 traduit l'évolution des concentrations en ammoniaque (NH₄⁺) et en nitrates (NO₃⁻) de l'effluent traité sortant de la station d'épuration en fonction de la quantité d'oxygène apportée par les aérateurs 7. Les zones en grisé correspondent à une élimination insuffisante de la pollution carbonée, soit parce que l'apport d'air est trop faible (zone A B) soit parce qu'il est trop fort et entraîne un phénomène de dénitrification dans le bassin de décantation 8 (zone E F).

La figure 3 illustre le procédé d'épuration selon l'invention faisant intervenir une régulation de la mesure d'un paramètre traduisant le niveau d'oxydation de l'effluent contenu dans le bassin d'aération 6 par la mesure en continu d'un paramètre représentatif de la qualité de l'effluent rejeté à la sortie de la station. Selon cette figure 3, le bassin d'aération 6 est équipé d'une sonde REDOX 11 mesurant le potentiel d'oxydo-réduction de l'effluent contenu dans ce bassin. Cette sonde REDOX 11 est reliée à un dispositif de régulation 12 permettant d'asservir le fonctionnement des turbines d'aération 7. Lorsque le potentiel d'oxydo-réduction de l'effluent, relevé par la sonde REDOX 11, est trop élevé, c'est-à-dire lorsqu'il dépasse une valeur seuil supérieure de consigne prédéterminée, le dispositif de régulation 12 modifie le cycle de fonctionnement des turbines 7 de façon à ce que celles-ci apportent moins d'oxygène au milieu. La formation des nitrates se trouve ainsi réduite. A l'opposé, lorsque le potentiel d'oxydo-réduction de l'effluent relevé par la sonde REDOX 11 est trop bas, c'est-à-dire lorsqu'il n'atteind pas une valeur seuil inférieure de consigne prédéterminée, le dispositif de régulation 12 modifie également le cycle de fonctionnement des turbines 7 de façon à ce que celles-ci apportent plus d'oxygène au milieu. La formation d'ammoniaque est ainsi contrée.

A la sortie du bassin de décantation 8 est disposée une sonde 13 destinée à mesurer la concentration en NH₄⁺ de l'effluent traité. Cette sonde 13 fait partie d'un dispositif de mesure 13 constitué par un ammonium-mètre 14. Cet ammonium-mètre 14 mesure en continu, grâce à sa sonde 13, la teneur de l'effluent rejeté en ions ammonium (NH₄⁺) et donc en ammoniaque. Cette concentration d'ammoniaque est un paramètre très représentatif de la qualité de l'effluent rejeté. En effet, non seulement une concentration en ammoniaque de l'effluent aussi faible que possible traduit-elle une bonne élimination de la pollution azotée, mais également une bonne élimination de la pollution carbonée. Cet élément présente donc un très grand intérêt pour évaluer la qualité de l'épuration et, par conséquent, pour déterminer si l'effluent subit un traitement efficace ou non au niveau des bassins d'aération. Cette qualité est déterminée par deux valeurs de consigne haute et basse du paramètre (NH₄⁺) définissant une plage à l'intérieur de laquelle on estime que la qualité de l'effluent rejeté est bonne.

Le dispositif de régulation 12 et l'ammonium-mètre 14 sont reliés à un automate 15 permettant d'entrer manuellement, par l'intermédiaire d'une console, les valeurs de consigne REDOX haute et basse ainsi que les valeurs de consigne haute et basse concernant la concentration en NH₄⁺. Cet automate 15 permet par ailleurs de gérer les valeurs de consigne haute et basse du potentiel REDOX en fonction de la qualité de l'effluent rejeté, c'est-à-dire en fonction de la concentration en ammoniaque de l'effluent à la sortie du bassin de décantation.

En cours d'utilisation, l'ammonium-mètre mesure en continu grâce à la sonde 13 la concentration en NH₄⁺ de l'effluent traité à la sortie du bassin de décantation 8. Dès que la concentration en NH₄⁺ de cet effluent traité sort de la plage de concentration définie par les valeurs de consignes, l'automate 15 incrémente de façon automatique de + ou - x millivolts les consignes REDOX afin de ramener la valeur en NH₄⁺ à l'intérieur de la fourchette de consigne définie. Les deux valeurs de consigne REDOX sont incrémentées dans le même sens et de la même valeur en millivolts. L'écart entre ces deux points de consigne n'est donc pas modifié par l'automate 15.

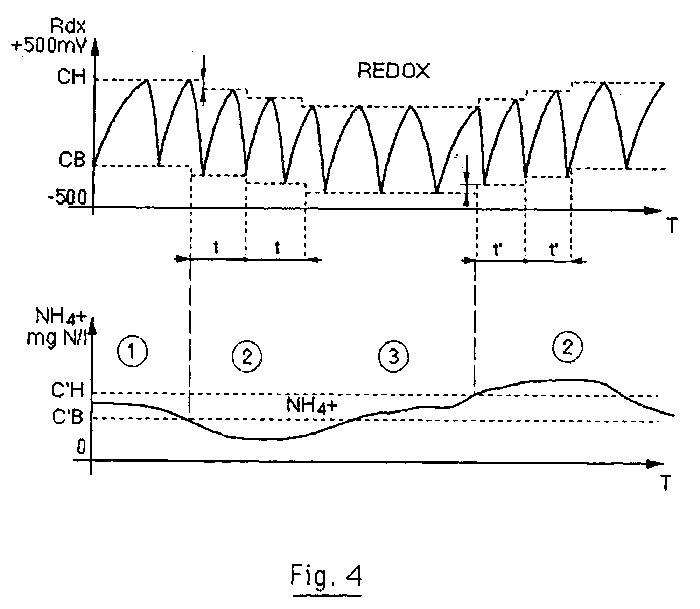

La figure 4 montre le diagramme de fonctionnement dans le temps du procédé selon l'invention. L'automate 15 permet de déterminer deux consignes initiales basse et haute CB et CH du potentiel REDOX définissant une plage à l'intérieur de laquelle les turbines 7 sont en état de fonctionnement et permettent l'aération de l'effluent. Lorsque la valeur du potentiel REDOX mesurée par la sonde 13 est en deçà de la valeur de consigne CB ou supérieure à la valeur de consigne CH, les turbines 7 sont à l'arrêt. L'automate 15 permet également de fixer les valeurs de consigne basse et haute C'B et C'H, de la concentration en ammoniaque (NH₄⁺) de l'effluent rejeté délimitant une plage à l'intérieur de laquelle on estime que la qualité de cet effluent est bonne. En se référant à la figure 4, tant que la concentration en NH₄⁺ relevée par la sonde 13 de l'ammonium-mètre se situe entre C'B et C'H (1), il n'y a pas de modification automatique des valeurs de consigne REDOX. Dès que cette valeur se situe en deçà de C'B (2) ou au-dessus de C'H, les valeurs de consigne REDOX sont modifiées automatiquement par l'automate 15 de façon à ramener la valeur mesurée de NH₄⁺ dans la plage délimitée par C'B et C'H (3).

Le procédé selon l'invention a été mis en oeuvre dans une station d'épuration conforme à la figure 1 située dans une zone présentant une grande sensibilité et requérant un objectif de qualité contraignant concernant l'élimination de tous les types de pollution habituellement véhiculés par des rejets domestiques et agroalimentaires. Notamment, cette station comporte des moyens de traitement pour la déphosphatation à l'aide de sulfate ferreux et pour la désinfection des effluents traités.

La station, qui assure l'épuration des eaux usées de 38 500 habitants équivalents, présente un bassin d'aération d'un volume de 6 000 m³ et reçoit quotidiennement, en moyenne, un volume d'effluents de 2 615 m³ représentant en moyenne une demande biologique en oxygène (DBO₅) de 2 078 Kg/j, soit une demande biologique en oxygène de 54 g par habitant-équivalent. Le volume du bassin d'aération autorise une charge volumique moyenne de 350 g DBO₅ par mètre cube du bassin d'aération et par jour.

Lors de la mise en oeuvre du procédé, les valeurs de consigne de la concentration en NH₄⁺ ont été fixées à 4,2 mg N/l (C'B) et 4,8 mg N/l (C'H) et dans un second temps à 0,8 mg N/l et 1,5 mg N/l. Des prélèvements moyens d'effluents entrant et d'effluents rejetés ont été réalisés afin d'évaluer l'influence du procédé sur la qualité de l'effluent rejeté (élimination des pollutions carbonées, azotées, phosphorées et bactériennes, et sur les produits de traitement (consommation d'électricité des aérateurs et consommation de chlore pour la désinfection). Les résultats de ces prélèvements sont réunis dans les tableaux I et II.

Le tableau I montre que les pourcentages d'élimination des pollutions carbonée, azotée et phosphorée sont très élevées, mais montre aussi une grande stabilité dans la qualité de l'effluent rejeté. En effet, pour les différentes analyses réalisées, les écarts observés d'un jour sur l'autre restent dans la marge d'incertitude de la mesure elle-même.

**TABLEAU I**

| | | Influent moy / j | Effluent moy / j | Effluent (jour mini) | Effluent (jour maxi) | % Elimination |
|---|---|---|---|---|---|---|
| DCO | mg O_{*2*}/l | 1500 | 19 | 38 | 61 | 96.7 |
| DBO | mg O_{*2*}/l | 790 | 10 | 8 | 12 | 98.7 |
| N total | mg N/l | 178 | 10 | 9 | 12 | 94.4 |
| NH_{*4*}⁺ | mg N/l | 80 | 4.7 | 4.1 | 5.2 | 94.1 |
| NO_{*3*}⁻ | mg N/l | O | O | O | O | - |
| P total | mg P/l | 28.2 | 0.75 | 0.5 | 1.0 | 97.3 |
| phosphates | mg P/l | 24.1 | 0.4 | 0.25 | 0.6 | 98.4 |

Le tableau II traduit l'incidence du procédé selon l'invention sur l'élimination de la pollution bactérienne.

**TABLEAU II**

| Taux de traitement g Cl₂/m³ | Bactéries Coliformes fécaux unités log dans 100 ml | Bactéries Coliformes totaux unités log dans 100 ml |
|---|---|---|
| 2,5 | 0,78 | 2,15 |

L'objectif de la désinfection est d'atteindre une quantité de coliformes fécaux par 100 ml d'effluent rejeté inférieure à 100, soit à 2 unités logarithmiques et une quantité de coliformes totaux inférieure à 1000, soit à 3 unités logarithmiques.

La grande stabilité de la qualité de l'effluent obtenue grâce au procédé selon l'invention permet une très bonne efficacité de la désinfection (140 coliformes totaux et 10 coliformes fécaux dans 100 ml) pour un taux de chloration faible de 2,5 g Cl₂/m³.

Les résultats exposés dans les tableaux I et II ont été obtenus avec une consommation électrique spécifique des aérateurs de 1 Kwh/kg DBO₅ traité. Cette consommation électrique très satisfaisante confirme que l'optimisation du fonctionnement des aérateurs pour obtenir un effluent traité stable n'est pas en contradiction avec les économies d'énergie.

L'exemple ici décrit de réalisation de l'invention n'est en aucun cas limitatif de celle-ci. Notamment, il pourra être envisagé d'utiliser un autre paramètre de contrôle de la qualité de l'effluent traité et/ou un autre paramètre de contrôle du niveau d'oxydation de l'effluent contenu dans les bassins d'aération. Il pourra également être envisagé d'utiliser une régulation faisant intervenir des insufflateurs d'air, ces insufflateurs permettant lors de leur fonctionnemnet d'injecter dans les bassins d'aération des quantités d'air plus ou moins importantes.

## Revendications

1. Procédé d'épuration d'effluents industriels et/ou urbains, du type "boues activées" comprenant les étapes consistant :
- à faire subir auxdits effluents un prétraitement consistant en au moins une opération de dégrillage et/ou une opération de dessablage et/ou une opération de dégraissage;
- à faire passer lesdits effluents prétraités dans au moins un bassin d'aération (6) à l'intérieur duquel les périodes oxydantes et les périodes réductrices sont alternées respectivement par mise en marche et arrêt d'au moins un aérateur (7) ;
- à faire séjourner lesdits effluents à la sortie dudit bassin d'aération (6) dans au moins un bassin de décantation (8) de façon à recueillir à la sortie dudit bassin de décantation d'une part des boues activées et d'autre part l'effluent traité,
procédé caractérisé en ce qu'il comprend les étapes complémentaires consistant à:
- mesurer continûment dans le bassin d'aération (6) un premier paramètre représentatif du niveau d'oxydation de l'effluent contenu dans ledit bassin ;
- asservir le fonctionnement dudit aérateur (7) à au moins une valeur de consigne dudit premier paramètre représentatif du niveau d'oxydation ;
- mesurer continûment, à la sortie du bassin de décantation (8) un second paramètre représentatif de la qualité de l'effluent traité ;
- asservir la détermination de ladite valeur de consigne dudit premier paramètre à au moins une valeur de consigne dudit second paramètre.

2. Procédé d'épuration d'effluents selon la revendication 1 caractérisé en ce que le fonctionnement dudit aérateur est asservi à deux valeurs de consigne (CB,CH) du premier paramètre représentatif du niveau d'oxydation et en ce que la détermination de ces deux valeurs de consigne (CB, CH) est asservie à deux valeurs de consigne (C'B,C'H) du second paramètre représentatif de la qualité de l'effluent traité.

3. Procédé d'épuration d'effluents selon l'une des revendications 1 ou 2 caractérisé en ce que ledit premier paramètre est choisi dans le groupe constitué par la teneur en oxygène dissous dudit effluent dans le bassin d'aération et le potentiel d'oxydo-réduction dudit effluent dans le bassin d'aération.

4. Procédé d'épuration d'effluents selon l'une des revendications 1 à 3 caractérisé en ce que ledit second paramètre est choisi dans le groupe constitué par la concentration en ammoniaque de l'effluent traité et la concentration en nitrates de l'effluent traité.

5. Procédé d'épuration d'effluents selon l'une quelconque des revendications 3 ou 4 caractérisé en ce que ledit premier paramètre est constitué par le potentiel d'oxydo-réduction et en ce que le second paramètre est constitué par la concentration en ammoniaque.

6. Procédé d'épuration d'effluents selon l'une quelconque des revendications 1 à 5 caractérisé en ce qu'il comprend une étape supplémentaire consistant à réduire la pollution bactériologique de l'effluent sortant du bassin de décantation grâce à un traitement de désinfection.

7. Procédé d'épuration d'effluents selon la revendication 6 caractérisé en ce que ledit traitement de désinfection est effectué par action de chlore gazeux ou d'ozone.

8. Procédé d'épuration d'effluents selon l'une des revendications 1 à 7 caractérisé en ce qu'il comprend une étape supplémentaire consistant à faire subir à l'effluent un traitement de déphosphatation.

9. Procédé d'épuration d'effluents selon la revendication 8 caractérisé en ce que ledit traitement de déphosphatation est effectué par addition de sulfate ferreux.

10. Station d'épuration pour la mise en oeuvre du procédé selon l'une des revendications 5 à 9 présentant au moins une installation de prétraitement des effluents, au moins un bassin d'aération (6) muni d'au moins une turbine (7) constituant un aérateur, au moins un bassin de décantation (8), caractérisée en ce qu'elle comprend en outre une chaîne de régulation constituée par :
- un dispositif de mesure du potentiel d'oxydo-réduction (12) incluant une sonde (11) disposée dans ledit bassin d'aération (6) ;
- un dispositif de mesure de la concentration en ammoniaque (14) de l'effluent traité incluant une sonde (13) disposée à la sortie dudit bassin de décantation (8) ;
- un automate (15) permettant d'entrer les deux valeurs de consignes (CB,CH) du potentiel d'oxydo-réduction correspondant au degré maximum d'oxydation et au degré maximum de réduction dudit effluent, d'entrer par ailleurs les deux valeurs de consigne (C'B, C'H) de ladite concentration en ammoniaque de l'effluent traité, représentatives de la qualité requise de l'effluent rejeté, de recueillir continûment les valeurs du potentiel d'oxydo-réduction et de la concentration d'ammoniaque relevées par lesdits dispositifs (12,14), d'asservir les valeurs de consigne (CB, CH) du potentiel d'oxydo-réduction auxdites valeurs relevées de la concentration en ammoniaque de l'eau traitée et d'asservir le fonctionnement de ladite turbine (7) auxdites valeurs de consigne (CB, CH) du potentiel d'oxydo-réduction.

11. Station d'épuration selon la revendication 10 caractérisé en ce que ledit automate (15) permet de calculer la pente de la courbe de l'évolution du paramètre représentatif de la qualité de l'eau traitée dans le temps et ainsi d'affiner la correction de la ou des valeurs de consigne du paramètre représentatif du niveau d'oxydation de l'effluent contenu dans le ou les bassins d'aération.

## Claims

1. Process for purifying industrial and/or urban effluents, of the "activated sludge" type comprising stages consisting of :
- subjecting the said effluents to a pretreatment consisting of at least one screening operation and/or one operation for the removal of sediment and/or one degreasing operation;
- causing the said pre-treated effluents to pass into at least one aeration tank (6) inside which oxidizing periods and reducing periods are alternated respectively by starting and stopping at least one aerator (7);
- causing the said effluents, on leaving the said aeration tank (6), to stand in at least one settling tank (8) so as to recover, at the outlet from the said settling tank, on the one hand activated sludge and on the other hand the treated effluent,
the process being characterized in that it comprises supplementary stages consisting of :
- continuously measuring in the aeration tank (6) a first parameter representative of the level of oxidation of the effluent contained in the said tank;
- controlling the operation of the said aerator (7) by at least one set value of the said first parameter representative of the level of oxidation;
- continuously measuring, at the outlet from the settling tank (8), a second parameter representative of the quality of the treated effluent;
- making the assignment of the said set value of the said first parameter dependant on at least one set value of the said second parameter.

2. Process for purifying effluents according to claim 1, characterized in that the operation of the said aerator is controlled by two set values (CB,CH) of the first parameter representative of the level of oxidation and in that the assignment of these two set values (CB,CH) is made dependant on two set values (C'B,C'H) of the second parameter representative of the quality of the treated effluent.

3. Process for purifying effluents according to either of claims 1 or 2, characterized in that the said first parameter is selected from the group consisting of the dissolved oxygen concentration in the said effluent in the aeration tank and the oxidation-reduction potential of the said effluent in the aeration tank.

4. Process for purifying effluents according to one of claims 1 to 3, characterized in that the said second parameter is selected from the group consisting of the concentration of ammonia in the treated effluent and the concentration of nitrates in the treated effluent.

5. Process for purifying effluents according to either of claims 3 or 4 characterized in that the said first parameter consists of the oxidation-reduction potential and in that the second parameter consists of the ammonia concentration.

6. Process for purifying effluents according to any one of claims 1 to 5, characterized in that it comprises a supplementary stage consisting of reducing the bacteriological pollution of the effluent leaving the settling tank by means of disinfection treatment.

7. Process for purifying effluents according to claim 6, characterized in that the said disinfection treatment is carried out by the action of gaseous chlorine or ozone.

8. Process for purifying effluents according to one of claims 1 to 7 characterized in that it comprises a supplementary stage consisting of subjecting the effluent to a phosphate removal treatment.

9. Process for purifying effluents according to claim 8 characterized in that the said phosphate removal treatment is carried out by the addition of ferrous sulphate.

10. Purification station for putting into practice the process according to one of claims 5 - 9 having at least one installation for pre-treating effluents, at least one aeration tank (6) provided with at least one turbine (7) constituting an aerator, and at least one settling tank (8), characterized in that it comprises in addition a regulating line consisting of:
- a device for measuring the oxidation-reduction potential (12) including a probe (11) placed in the said aeration tank (6);
- a device for measuring the ammonia concentration (14) of the treated effluent including a probe (13) placed at the outlet from the said settling tank (8);
- an automatic control (15) making it possible to enter two set values (CB,CH) of the oxidation-reduction potential corresponding to the maximum degree of oxidation and to the maximum degree of reduction of the said effluent, to enter in addition two set values (C'B,C'H), of the said ammonia concentration of the treated effluent, representative of the required quality of the discharged effluent, to collect continually the values of the oxidation-reduction potential and the ammonia concentration recorded by the said devices (12,14), to make the set values (CB,CH) of the oxidation-reduction potential dependant on the said recorded values of the ammonia concentration of the treated water and to control the operation of the said turbine (7) by the said set values (CB,CH) of the oxidation-reduction potential.

11. Purification station according to claim 10 characterized in that the said automatic control (15) makes it possible to calculate the slope of the curve of changes in the parameter representative of the quality of the treated water with time, and thus to improve the correction of the set value or values of the parameter representative of the level of oxidation of the effluent contained in the aeration tank or tanks.

## Patentansprüche

1. Verfahren zur Reinigung industrieller und/oder städtischer Abwässer vom Typ "Aktivschlämme", welches die folgenden Schritte umfaßt:
- die Abwässer werden einer Vorbehandlung unterzogen, die mindestens aus einer Reinigung über Rechen und/oder einer Entsandung und/oder einer Entfettung besteht:
- die so vorbehandelten Abwässer durchlaufen mindestens ein Belüftungsbecken (6), in dem Oxydations- und Reduktionsperioden durch das Anfahren oder das Abstellen von mindestens einem Belüfter (7) sich jeweils abwechseln;
- nachdem sie das Belüftungsbecken (6) verlassen, verweilen die Abwässer in mindestens einem Absetzbecken (8), so daß am Ausgang dieses Absetzbeckens einerseits aktivierte Schlämme und andererseits das behandelte Abwasser aufgefangen wird;
das Verfahren ist dadurch gekennzeichnet, daß es Zusatzschritte umfaßt, die im folgenden bestehen:
- im Belüftungsbecken (6) wird ein erster Parameter ständig gemessen, der für den Oxydierungsgrad des im Becken befindlichen Abwassers repräsentativ ist;
- die Funktion des Belüfters (7) wird von mindestens einem Einstellwert des ersten Parameters gesteuert, der für den Oxydierungsgrad repräsentativ ist;
- am Ausgang des Absetzbeckens (8) wird ständig ein zweiter Parameter gemessen, der für die Qualität des behandelten Abwassers repräsentativ ist;
- die Feststellung des Einstellwertes für den ersten Parameter wird von mindestens einem Einstellwert des zweiten Parameters gesteuert.

2. Verfahren zur Reinigung von Abwässern gemäß Anspruch 1,
dadurch gekennzeichnet, daß die Funktion des Belüfters von zwei Einstellwerten (CB, CH) des ersten, für den Oxydierungsgrad repräsentativen Parameters gesteuert wird und, daß die Feststellung dieser zwei Einstellwerte (CB, CH) von zwei Einstellwerten (C'B, C'H) des zweiten, für die Qualität der behandelten Abwässer repräsentativen Parameters gesteuert wird.

3. Verfahren zur Reinigung von Abwässern gemäß Anspruch 1 oder 2,
dadurch gekennzeichnet, daß der erste Parameter aus der Gruppe gewählt wird, welche aus dem Gehalt des in dem Belüftungsbecken im Abwasser gelösten Sauerstoffs und aus dem Redoxpotential des Abwassers im Belüftungsbecken besteht.

4. Verfahren zur Reinigung von Abwässern gemäß einem der Ansprüche 1 bis 3.
dadurch gekennzeichnet, daß der zweite Parameter aus der Gruppe gewählt wird, die aus der Amnoniakkonzentration und der Nitratkonzentration im behandelten Abwasser besteht.

5. Verfahren zur Reinigung von Abwässern gemäß einem der Ansprüche 3 oder 4,
dadurch gekennzeichnet, daß der erste Parameter aus dem Redoxpotential und der zweite Parameter aus der Ammoniakkonzentration besteht.

6. Verfahren zur Reinigung von Abwässern gemäß einem der Ansprüche 1 bis 5,
dadurch gekennzeichnet, daß es einen zusätzlichen Schritt umfaßt, der in der Verringerung der bakteriologischen Verunreinigung des aus dem Absetzbeckens kommenden Abwassers mittels eines Desinfektionsverfahrens besteht.

7. Verfahren zur Reinigung von Abwässern gemäß Anspruch 6,
dadurch gekennzeichnet, daß es sich beim Desinfektionsverfahren um die Wirkung von Chlorgas oder von Ozon handelt.

8. Verfahren zur Reinigung von Abwässern gemäß einem der Ansprüche 1 bis 7,
dadurch gekennzeichnet, daß es einen zusätzlichen Schritt umfaßt, darin bestehend, daß das Abwasser einer Dephosphatierung unterzogen wird.

9. Verfahren zur Reinigung von Abwässern gemäß Anspruch 8,
dadurch gekennzeichnet, daß die Dephosphatierung in der Zugabe von Eisen (II) Sulfat besteht.

10. Abwasserreinigungsanlage zur Ausführung des Verfahrens gemäß einem der Ansprüche 5 bis 9, die mindestens eine Vorrichtung für die Vorbehandlung der Abwässer, mindestens ein Belüftungsbecken (6) mit mindestens einer Turbine (7), welche einen Belüfter darstellt und mindestens ein Absetzbecken (8) umfaßt,
dadurch gekennzeichnet, daß sie ferner eine Regulierungskette umfaßt, die aus folgendem besteht:
- einer Meßvorrichtung des Redoxpotentials (12) mit einer Sonde (11), die sich im Belüftungsbecken (6) befindet;
- einer Meßvorrichtung für die Ammoniakkonzentration (14) des behandelten Abwassers, mit einer Sonde (13), die sich am Ausgang des Absetzbeckens (8) befindet;-
- einem Automat (15) zum Eingeben der zwei Einstellwerte (CB, CH) des Redoxpotentials, die dem höchsten Oxydationsgrad und dem höchsten Reduktionsgrad des Abwassers entsprechen, ferner zum Eingeben der zwei Einstellwerte (C'B, C'H) der Ammoniakkonzentration des behandelten Abwassers, die für die geforderte Qualität des abgegebenen Abwassers repräsentativ sind, zum ständigen Aufnehmen der Redoxpotentialwerte und der Ammoniakkonzentrationswerte, die von den Vorrichtungen (12, 14) aufgezeichnet werden und um die Steuerung der Einstellwerte (CB, CH) des Redoxpotentials durch die festgestellten Ammoniakkonzentrationswerte des behandelten Abwassers sowie die Steuerung der Turbine (7) durch die Einstellwerte (CB, CH) des Redoxpotentials sicherzustellen.

11. Abwasserreinigungsanlage gemäß Anspruch 10,
dadurch gekennzeichnet, daß der Automat (15) die Berechnung der Neigung der Änderungskurve des Parameters ermöglicht, der für die Qualität des behandelten Abwassers als Funktion der Zeit repräsentativ ist, wodurch die Verfeinerung der Korrektur des Einstellwertes oder der Einstellwerte des Parameters ermöglicht wird, der für den Oxydationsgrad des in dem oder in den Belüftungsbecken enthaltenen Abwassers repräsentativ ist.
